# EUROPÄISCHE PATENTSCHRIFT

(11) **EP 3 960 424 B1**
(45) Veröffentlichungstag und Bekanntmachung des Hinweises auf die Patenterteilung: **09.08.2023**
(21) Anmeldenummer: 21185529.1
(22) Anmeldetag: 14.07.2021
(51) Int. Cl.: B29C 49/42, B29C 49/06, B29C 49/64, B29C 49/78, B29K 67/00, B29L 31/00

(54) **VORRICHTUNG UND VERFAHREN ZUM BEHANDELN VON KUNSTSTOFFVORFORMLINGEN**
METHOD AND DEVICE FOR TREATING PLASTIC PRE-FORMS
DISPOSITIF ET PROCÉDÉ DE TRAITEMENT DES PRÉFORMES EN MATIÈRE PLASTIQUE

(30) Priorität: 27.08.2020 DE 102020122470
(43) Veröffentlichungstag der Anmeldung: 02.03.2022
(73) Patentinhaber: KRONES AG, 93073 Neutraubling (DE)
(72) Erfinder: Sternkopf, Bernhard, 93073 Neutraubling (DE); Hoellriegl, Thomas, 93073 Neutraubling (DE); Geltinger, Florian, 93073 Neutraubling (DE)
(74) Vertreter: Bittner, Bernhard

(56) Entgegenhaltungen:
- DE-A1-102017 100 635
- DE-A1-102018 111 235
- US-A1- 2010 108 473
- US-A1- 2014 167 301

## Beschreibung

Die vorliegende Erfindung bezieht sich auf ein Verfahren und eine Vorrichtung zum Behandeln von Kunststoffvorformlingen. Aus dem Stand der Technik ist es bekannt, dass sogenannte Kunststoffvorformlinge bei der Produktion von Behältnissen zunächst erwärmt werden, und anschließend in diesem erwärmten Zustand von einer Umformungsvorrichtung, insbesondere einer Streckblasmaschine, zu den Behältnissen, beispielsweise Flaschen, umgeformt werden. Zu diesem Zweck ist es teilweise bekannt, dass die Kunststoffvorformlinge zunächst sortiert werden, anschließend über eine Zuführeinrichtung, wie beispielsweise eine Zuführrinne, einer Vereinzelungseinrichtung zugeführt werden, und diese Vereinzelungseinrichtung die Kunststoffvorformlinge vereinzelt und einer weiteren Transporteinrichtung, insbesondere einem Ofen, zum Erwärmen der Kunststoffvorformlinge zuführt. Gattungsgemäße Verfahren und Vorrichtungen sind in den Patentschriften DE102018-111235A1, US2014/167301 A1, US2010/108473A1 und DE102017-100635A1 beschrieben.

Genauer gesagt werden üblicherweise die Vorformlinge mittels einer Schiene einer Behandlungseinheit zugeführt, und mittels einer Vereinzelungseinrichtung, beispielsweise in Form eines Sägezahnsterns, auf Teilung gebracht. Die Kunststoffvorformlinge werden dabei üblicherweise vor diesem sägezahnförmigen Stern mittels einer Rückhaltevorrichtung, wie etwa einer Preformsperre gestoppt. Beim Produktionsstart werden im Stand der Technik üblicherweise bereits die nachfolgenden Transporteinrichtung und auch die Vereinzelungseinrichtung auf ihre Transportgeschwindigkeit gebracht. Sobald dies geschehen ist, gibt die Rückhaltevorrichtung die Kunststoffvorformlinge frei. Insbesondere bei hohen Maschinenleistungen müssen daher die Kunststoffvorformlinge in sehr kurzer Zeit ausgehend von dem Stillstand in der Halteeinrichtung auf eine hohe Geschwindigkeit beschleunigt werden.

Dadurch kommt es im Stand der Technik immer wieder zu Störungen im Bereich der Vereinzelungseinrichtungen bzw. des Sterns oder auch der Rückhaltevorrichtung, oder auch der Einlaufführung oder der Zuführung der Kunststoffvorformlinge. Aus dem internen Stand der Technik ist eine Vorgehensweise bekannt, bei der die zwei Transportsterne vorgesehen sind, welche unterschiedlich beschleunigen. Allerdings wäre es wünschenswert, die obigen Störungen in anderer bzw. einfacherer Weise zu vermeiden.

Der vorliegenden Erfindung liegt daher die Aufgabe zugrunde, derartige Fehler zu reduzieren. Diese Aufgabe wird durch die Gegenstände der unabhängigen Patentansprüche erreicht. Vorteilhafte Ausführungsformen und Weiterbildungen sind Gegenstand der Unteransprüche.

Bei einem erfindungsgemäßen Verfahren zum Behandeln von Kunststoffvorformlingen werden die Kunststoffvorformlinge mit einer Zuführtransporteinrichtung in einer Reihe transportiert und mittels einer Vereinzelungseinrichtung vereinzelt. Dabei weist diese Vereinzelungseinrichtung einen bezüglich einer vorgegebenen Drehachse drehbaren Träger auf, und/oder während des Vereinzelungsvorgangs dreht sich ein bezüglich einer vorgegebenen Drehachse drehbarer Träger. Der Träger weist an seinem Außenumfang eine Vielzahl von zueinander in Umfangsrichtung des Trägers äquidistanten Ausnehmungen zum Aufnehmen der Kunststoffvorformlinge in einen Übernahmebereich auf. Dabei fördert weiterhin die Vereinzelungseinrichtung die Kunststoffvorformlinge vereinzelt entlang eines vorgegeben Transportpfadabschnitts und die Vereinzelungseinrichtung übergibt die Kunststoffvorformlinge in einem Übergabebereich an eine weitere Transporteinrichtung, welche die Kunststoffvorformlinge mit einer vorgegebenen Transportgeschwindigkeit weitertransportiert.

Erfindungsgemäß erhöht während eines Anlaufvorgangs die Vereinzelungseinrichtung eine Transportgeschwindigkeit, mit der sie die Kunststoffvorformlinge von dem Übernahmebereich zu dem Übergabebereich fördert.

Es wird daher vorgeschlagen, dass nicht, wie im Stand der Technik üblich, die Kunststoffvorformlinge während des Anlaufvorgangs unmittelbar an die bereits mit Transportgeschwindigkeit drehende Vereinzelungseinrichtung übergeben werden, sondern dass diese vielmehr mit einer geringeren Geschwindigkeit gestartet wird, und erst während des Förderns der ersten Kunststoffvorformlinge diese Geschwindigkeit auf die Arbeitsgeschwindigkeit beschleunigt und/oder hochsynchronisiert wird. Bevorzugt wird also während eines Anlaufvorgangs der Anlage die Drehgeschwindigkeit des Trägers erhöht. Dabei kann diese Drehgeschwindigkeit ausgehend von einem Stillstand erhöht werden oder auch ausgehend von einer (geringeren) Anfangsgeschwindigkeit.

Dabei ist es möglich und bevorzugt, dass die Vereinzelungseinrichtung und wenigstens eine weitere Transporteinrichtung, insbesondere eine sich an die Vereinzelungseinrichtung anschließende Transporteinrichtung voneinander entkoppelt sind. Dies bedeutet, dass eine Synchronisation zwischen der Vereinzelungseinrichtung und dieser Transporteinrichtung wenigstens zeitweise aufgehoben ist, insbesondere zumindest in dem Zeitraum eines Anfahrens.

Dabei ist es möglich, dass im normalen Arbeitsbetrieb eine derartige Kopplung und/oder Synchronisation besteht, diese aber zum Zweck des Anfahrens aufgehoben wird. Eine derartige Vorgehensweise kann auch im Fall von Störungen gewählt werden, Falls beispielsweise an der Vereinzelungseinrichtung eine Störung auftritt, kann die Kopplung aufgehoben werden und die Vereinzelungseinrichtung (sofort) abbremsen. Die nachfolgende Transporteinrichtung kann weiterlaufen, etwa bis die Erwärmungseinrichtung leergefahren ist.

Bevorzugt wird vor oder während dieses Beschleunigungsvorgangs der Vereinzelungseinrichtung die Zufuhr von Kunststoffvorformlingen in die Vereinzelungseinrichtung begonnen, so dass die ersten in die Vereinzelungseinrichtung gelangenden Kunststoffvorformlinge mit einer geringeren Geschwindigkeit übernommen bzw. transportiert wird. Damit wird eine Transportgeschwindigkeit der ersten in die Vereinzelungseinrichtung gelangenden Kunststoffvorformlinge von einer vorgegebenen Anfangsgeschwindigkeit auf die Arbeitsgeschwindigkeit erhöht. Bevorzugt ändert sich dabei auch diese bzw. steigt dabei auch diese Anfangsgeschwindigkeit ausgehend von dem ersten zu weiteren Kunststoffvorformlingen an.

Bevorzugt wird diese Transportgeschwindigkeit kontinuierlich erhöht.

Bevorzugt dreht sich daher die Vereinzelungseinrichtung bzw. insbesondere der oben erwähnte Träger bzw. der sägezahnartige Stern zunächst mit einer reduzierten Leistung im Vergleich zu der nachfolgenden Einheit. Sobald die ersten Kunststoffvorformlinge zugeführt werden, was beispielsweise nach dem Öffnen einer Rückhaltevorrichtung erfolgen kann, synchronisiert dieser sägezahnförmige Stern bzw. die Vereinzelungseinrichtung bis zu dem Übergabepunkt auf die Produktionsgeschwindigkeit auf.

Auf diese Weise reduzieren sich die Beschleunigungszeiten für die Kunststoffvorformlinge und auch die Störanfälligkeit in diesem Bereich wird erheblich reduziert.

Durch die erfindungsgemäße Vorgehensweise werden damit Eintaktprobleme beim Anlaufen gelöst. Diese Vorgehensweise kann immer dann gewählt werden, wenn in einem Arbeitsbetrieb die Maschinen angehalten werden und insbesondere, wenn die Vereinzelungsvorrichtung neu auf die Arbeitsgeschwindigkeit der nachfolgenden Transporteinrichtung synchronisiert werden muss.

Bei einer bevorzugen Ausführungsform fördert die Zuführtransporteinrichtung die Kunststoffvorformlinge in Reihe. Vorteilhaft ist die Zuführtransporteinrichtung als Zuführschiene ausgebildet, innerhalb derer die Kunststoffvorformlinge gefördert werden. Dieses Fördern kann dabei beispielsweise durch die Gravitation bzw. die Hangabtriebskraft erfolgen. Insbesondere werden dabei die Kunststoffvorformlinge wenigstens zum Teil und bevorzugt vollständig einander berührend gefördert, d.h. insbesondere berührt dabei jeder Kunststoffvorformling zwei weitere Kunststoffvorformlinge.

Bei einer weiteren bevorzugten Ausführungsform handelt es sich bei der weiteren Transporteinrichtung insbesondere um einen Kettenförderer. Besonders bevorzugt fördert die weitere Transporteinrichtung die Kunststoffvorformlinge ebenfalls vereinzelt.

Bei einer weiteren bevorzugten Ausführungsform weist die Vereinzelungseinrichtung einen Führungsbogen auf. Besonders bevorzugt werden die Kunststoffvorformlinge zwischen einem (insbesondere sägezahnförmigen) Außenumfang des Trägers und dem Führungsbogen bzw. einem Außenumfang des Trägers und einem Innenumfang dieses Führungsbogens transportiert.

Bei einer weiteren vorteilhaften Ausführungsform erhöht die Vereinzelungseinrichtung die Transportgeschwindigkeit bis diese der Transportgeschwindigkeit der weiteren Transporteinrichtung entspricht. Vorteilhaft wird zu diesem Zeitpunkt die weitere Transporteinrichtung bereits in der Arbeitsgeschwindigkeit betrieben.

Damit wird eine Transportgeschwindigkeit der Vereinzelungseinrichtung auf die Arbeitsgeschwindigkeit aufsynchronisiert und insbesondere während des Anlaufvorgangs aufsynchronisiert.

Bei einem weiteren bevorzugten Verfahren erfährt derjenige Kunststoffvorformling, der nach dem Anlaufen der Vorrichtung der Vereinzelungseinrichtung zugeführt wird, die größte Beschleunigung.

Hinsichtlich dieses oder dieser ersten Kunststoffvorformlinge ist die beschriebene Vorgehensweise auch am wirksamsten, da ab diesem Zeitpunkt auch die Förderung durch die Zuführschiene bzw. Zuführtransporteinrichtung begonnen hat und sich auch in der Zuführschien die Kunststoffvorformlinge mit zunehmender Geschwindigkeit bewegen. Auf diese Weise kann die Störanfälligkeit verringert werden.

Die nachfolgenden Kunststoffvorformlinge, das heißt die auf den ersten Kunststoffvorformling folgenden Vorformlinge werden bereits insgesamt während des Transports mit der Vereinzelungseinrichtung weniger beschleunigt, da diese bereits eine höhere Anfangsgeschwindigkeit aufweist.

Bei einer weiteren bevorzugten Ausführungsform gibt eine Sperreinrichtung vor oder während des Anlaufvorgangs die Zufuhr der Kunststoffvorformlinge in die Vereinzelungseinrichtung frei. Diese Sperreinrichtung kann dabei besonders bevorzugt an einem Einlauf der Vereinzelungseinrichtung angeordnet sein. Durch ein Öffnen der Sperreinrichtung gelangen die Kunststoffvorformlinge in die Vereinzelungseinrichtung und werden von dieser gefördert.

Bei einem weiteren bevorzugten Verfahren wird zunächst die weitere Transporteinrichtung auf eine Arbeitsgeschwindigkeit beschleunigt, und anschließend die Vereinzelungseinrichtung mit Kunststoffvorformlingen bestückt, und ebenfalls auf die Arbeitsgeschwindigkeit beschleunigt.

Bei einem weiteren bevorzugten Verfahren wird die Vereinzelungseinrichtung von einer Anfangsgeschwindigkeit auf eine Arbeitsgeschwindigkeit beschleunigt. Diese Anfangsgeschwindigkeit kann dabei auch ein Stillstand der Vereinzelungseinrichtung sein. Besonders bevorzugt erfolgt die Beschleunigung der Vereinzelungseinrichtung von der Anfangsgeschwindigkeit auf die Arbeitsgeschwindigkeit innerhalb eines Drehwinkels bzw. in einer Drehbewegung des Trägers, die größer ist als 20°, bevorzugt größer als 40°, bevorzugt größer als 60°, bevorzugt größer als 80°, bevorzugt größer als 100°, bevorzugt größer als 120° und bevorzugt größer als 140° und bevorzugt größer als 160° und besonders bevorzugt größer als 180° und besonders bevorzugt größer als 190°.

Besonders bevorzugt erfolgt diese Beschleunigung von der Anfangsgeschwindigkeit der Vereinzelungseinrichtung auf die Endgeschwindigkeit der Vereinzelungseinrichtung innerhalb eines Drehwinkels bzw. in einer Drehbewegung, der geringer ist als 350°, bevorzugt geringer als 340°, bevorzugt geringer als 320°, bevorzugt geringer als 300°.

Bevorzugt wird eine vorgegebene Anzahl von Kunststoffvorformlingen durch die Vereinzelungseinrichtung beschleunigt, wobei diese vorgegebene Anzahl größer ist als fünf, bevorzugt größer als 10. Bevorzugt ist diese vorgegebene Anzahl kleiner als 125, bevorzugt kleiner als 75, bevorzugt kleiner als 50 und bevorzugt kleiner als 40

Diese Winkelbereiche, in denen die Aufsynchronisierung bzw. die Beschleunigung der Vereinzelungseinrichtung erfolgt, haben sich als besonders günstig erwiesen, um einerseits eine geometrisch günstige Zuführung der Kunststoffvorformlinge zu erreichen, und um andererseits auch vertretbare Beschleunigungen der Vereinzelungseinrichtung zu realisieren.

Es wäre jedoch auch möglich, dass gleichzeitig mit dem Anfahren der Vereinzelungseinrichtung bzw. mit dem Beschleunigen auch die weitere Transporteinrichtung beschleunigt wird, wobei bevorzugt sichergestellt wird, dass zumindest in dem Moment, in dem der Kunststoffvorformling bei der weiteren Transporteinrichtung ankommt, diese bereits ihre Arbeitsgeschwindigkeit erreicht hat.

Bei einem weiteren bevorzugten Verfahren werden die Kunststoffvorformlinge während des Transports mit der weiteren Transporteinrichtung erwärmt. Bevorzugt fördert die weitere Transporteinrichtung die Kunststoffvorformlinge durch einen Ofen, wie etwa einen Infrarotofen. Besonders bevorzugt dienen zum Erwärmen der Kunststoffvorformlinge stationär angeordnete Heizeinrichtungen, beispielsweise Infrarotstrahler. Es wäre jedoch auch möglich, dass die Kunststoffvorformlinge mittels Mikrowellenbeaufschlagung erwärmt werden.

Besonders bevorzugt werden die Kunststoffvorformlinge von der weiteren Transporteinrichtung mit einer Vielzahl von Halteeinrichtungen, wie insbesondere Haltedornen, gegriffen, und vereinzelt transportiert. Besonders bevorzugt werden die Kunststoffvorformlinge auch während der Erwärmung durch die Erwärmungseinrichtung mittels der Halteeinrichtung bezüglich ihrer Längsachsen gedreht. Besonders bevorzugt werden die Kunststoffvorformlinge nach der Erwärmung umgeformt, beispielsweise streckgeblasen.

Es ist vorteilhaft, dass die Kunststoffvorformlinge, sobald sie die weitere Transporteinrichtung erreichen von dieser weiteren Transporteinrichtung bereits mit der gewünschten Arbeitsgeschwindigkeit transportiert werden. Auf diese Weise kann die Zeit, während derer die Kunststoffvorformlinge erwärmt werden, sehr genau bestimmt werden und auch möglichst konstant gehalten werden, was sich letztlich auch auf den Erwärmungsvorgang der Kunststoffvorformlinge positiv auswirkt.

Die vorliegende Erfindung ist weiterhin auf eine Vorrichtung zur Behandlung von Kunststoffbehältnissen gerichtet. Diese weist eine Zuführtransporteinrichtung auf, welche dazu geeignet und bestimmt ist, die Kunststoffvorformlinge in einer Reihe zu transportieren, sowie eine in einer Transportrichtung der Kunststoffvorformlinge nach der Zuführtransporteinrichtung angeordnete Vereinzelungseinrichtung, welche die Kunststoffvorformlinge vereinzelt (und dabei insbesondere bezüglich einander beabstandet) fördert.

Dabei weist die Vereinzelungseinrichtung einen bezüglich einer vorgegebenen Drehachse drehbaren Träger auf, der an seinem Außenumfang eine Vielzahl von zueinander in einer Umfangsrichtung des Trägers äquidistante Ausnehmungen zum Aufnehmen der Kunststoffvorformlinge in einem Übernahmebereich aufweist, wobei diese Vereinzelungseinrichtung die Kunststoffvorformlinge vereinzelt (und insbesondere mit äquidistanten Abständen) entlang eines vorgegebenen Transportpfadabschnittes transportiert.

Weiterhin weist die Vorrichtung eine weitere Transporteinrichtung auf, welche sich in der Transportrichtung an die Vereinzelungseinrichtung anschließt, wobei die Kunststoffvorformlinge in einem Übergabebereich von der Vereinzelungseinrichtung an diese weitere Transporteinrichtung übergebbar sind, und die weitere Transporteinrichtung die Kunststoffvorformlinge mit einer weiteren vorgegebenen Transportgeschwindigkeit weiter transportiert. Insbesondere handelt es sich bei dieser weiteren Transportgeschwindigkeit um eine Arbeitsgeschwindigkeit, mit der die Kunststoffvorformlinge transportiert werden.

Erfindungsgemäß weist die Vorrichtung eine Steuerungseinrichtung zum Steuern der Vereinzelungseinrichtung und/oder der weiteren Transporteinrichtung auf, welche bewirkt, das während eines Anlaufvorgangs die Vereinzelungseinrichtung eine Transportgeschwindigkeit, mit der sie die Kunststoffvorformlinge von dem Übernahmebereich zu dem Übergabebereich fördert, erhöht.

Es wird daher auch vorrichtungsseitig vorgeschlagen, dass eine Steuerungseinrichtung eine Aufsynchronisierung der Vereinzelungseinrichtung bewirkt, und zwar insbesondere, um die ersten Kunststoffvorformlinge von dem Übernahmebereich zu dem Übergabebereich zu fördern.

Bevorzugt ist eine gemeinsame Steuerungseinrichtung zum Steuern der Vereinzelungseinrichtung und der weiteren Transporteinrichtung vorgesehen.

Bei einer weiteren bevorzugen Ausführungsform weist die Vorrichtung eine Sperreinrichtung auf, welche zwischen der Zuführtransporteinrichtung 2 und der Vereinzelungseinrichtung 4 angeordnet ist, und welche derart schaltbar ist, dass sie eine Zufuhr der Kunststoffvorformlinge zu der Vereinzelungseinrichtung ermöglicht oder verhindert.

Damit können, wenn diese Sperreinrichtung in einem Sperrzustand ist, keine Kunststoffvorformling zu der Vereinzelungseinrichtung gelangen. Sobald die Sperreinrichtung freigegeben ist, was beispielsweise durch eine Blockadeelement oder einen Sperrfinger erfolgen kann, können die Kunststoffvorformlinge in die Vereinzelungseinrichtung gelangen, und von dieser weiter transportiert werden.

Bei einer weiteren vorteilhaften Ausführungsform steuert die Steuerungseinrichtung die Vereinzelungseinrichtung derart, dass in einem Arbeitsbetrieb die Vereinzelungseinrichtung und die weitere Transporteinrichtung synchronisiert betreibbar sind, und insbesondere die Steuerungseinrichtung die Vereinzelungseinrichtung während des Anlaufvorgangs derart steuert, dass die Transportgeschwindigkeit des ersten während des Anlaufvorgangs der Vereinzelungseinrichtung zugeführten Kunststoffvorformlings während der Übergabe an die weitere Transporteinrichtung in den Übergabebereich auf die Transportgeschwindigkeit der weiteren Transportgeschwindigkeit synchronisiert ist.

Bei einer weiteren bevorzugten Ausführungsform steuert die Steuerungseinrichtung auch die weitere Transporteinrichtung und zwar insbesondere derart, dass spätestens bei der Übergabe des ersten Kunststoffvorformlings an die weitere Transporteinrichtung diese bereits die Arbeitsgeschwindigkeit erreicht hat.

Besonders bevorzugt bewirkt die Steuerungseinrichtung eine im Wesentlichen konstante Beschleunigung der Vereinzelungseinrichtung. Auch auf diese Weise können ruckartige Bewegungen verhindert werden.

Bei einer weiteren vorteilhaften Ausführungsform ist der oben erwähnte Transportträger der Vereinzelungseinrichtung segmentiert aufgebaut. So kann er beispielsweise zwei Segmente aufweisen, die gegebenenfalls auch getrennt voneinander montierbar und demontierbar sind Weitere Vorteile und Ausführungsformen ergeben sich aus den beigefügten Zeichnungen.

Darin zeigen:
- Fig. 1: eine Darstellung einer erfindungsgemäßen Anlage zum Herstellen von Behältnissen;
- Fig. 2: eine Detaildarstellung zur Veranschaulichung der Erfindung.

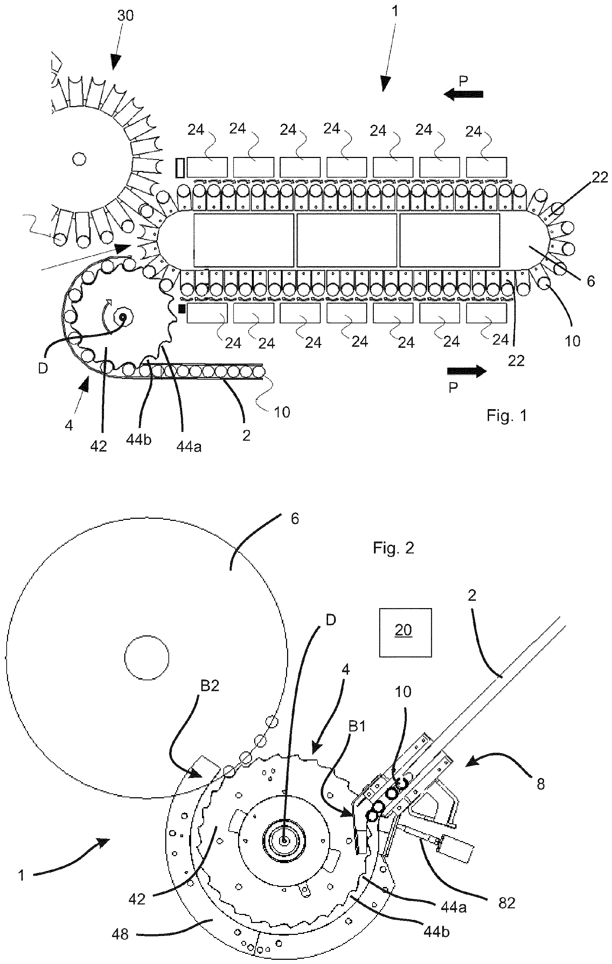

Figur 1 zeigt eine Erwärmungsvorrichtung zum Erwärmen von Kunststoffvorformlingen 10. Dabei bezieht sich das Bezugszeichen 6 in seiner Gesamtheit auf eine weitere Transporteinrichtung, welche die Kunststoffvorformlinge entlang eines Transportpfads P und vorbei an stationär angeordneten Heizeinrichtungen 24 transportiert. Bei der in Figur 1 gezeigten Ausführungsform ist diese Transporteinrichtung eine umlaufende Kette, an der eine Vielzahl von Halteelementen 22 zum Halten der Kunststoffvorformlinge angeordnet ist. Dabei können diese Kunststoffvorformlinge auch, wie durch die kleinen Pfeile angedeutet, gedreht werden.

Das Bezugszeichen 4 kennzeichnet eine Zuführtransporteinrichtung 4, die hier als Eintaktstern ausgebildet ist. Man erkennt, dass die Kunststoffvorformlinge über eine Zuführschiene 2 zugeführt werden und von der Zuführtransporteinrichtung 4 vereinzelt werden. Das Bezugszeichen 42 kennzeichnet einen bezüglich einer Drehachse D drehbaren Träger und die Bezugszeichen 44a und 44b zwei Halteeinrichtungen, die hier als Ausnehmungen ausgebildet sind, die wiederum am Umfang des drehbaren Trägers 42 angeordnet sind.

Das Bezugszeichen 30 kennzeichnet eine nachgeordnete Transporteinrichtung, mit der die nunmehr erwärmten Kunststoffvorformlinge an eine (nicht gezeigte) Vorrichtung zum Umformen von Kunststoffvorformlingen zu Kunststoffbehältnissen, wie etwa eine Blasformmaschine übergeben werden.

Figur 2 zeigt eine schematische Darstellung einer erfindungsgemäßen Vorrichtung 1. Diese weist eine Zuführtransporteinrichtung 2 auf, innerhalb derer Kunststoffvorformlinge 10 gefördert werden. Dabei weist diese Zuführtransporteinrichtung 2 hier zwei Transportschienen auf, zwischen denen die Kunststoffvorformlinge, insbesondere an ihrem Tragring gefördert werden.

Das Bezugszeichen 8 kennzeichnet in seiner Gesamtheit eine Sperreinrichtung, welche die Zuführung der Kunststoffvorformlinge zu einer Vereinzelungseinrichtung 4 erlaubt oder sperrt. Zu diesem Zweck weist diese Sperreinrichtung ein Sperrelement 82 auf, welches beispielsweise pneumatisch zustellbar oder entfernbar ist.

Die Vereinzelungseinrichtung 4 weist einen bezüglich einer Drehachse D drehbaren Träger 42 auf, der in seinem Außenumfang eine Vielzahl von Ausnehmungen 44a und 44b aufweist, welche jeweils geeignet sind, um die Kunststoffvorformlinge aufzunehmen. Das Bezugszeichen 48 kennzeichnet einen Führungsbogen, wobei die Kunststoffvorformlinge zwischen dem Führungsbogen und den Ausnehmungen 44 a und 44 b aufnehmbar und so auch transportierbar sind.

Das Bezugszeichen 6 kennzeichnet die weitere Transporteinrichtung, die wie oben erwähnt, zum Transportieren der Kunststoffvorformlinge während deren Erwärmungen dient. In diesem Bereich werden die Kunststoffvorformlinge wie oben erwähnt vereinzelt transportiert und auch vereinzelt erwärmt. Die Vereinzelungseinrichtung 4 erzeugt damit zwischen den einzelnen Kunststoffvorformlingen denjenigen Abstand, der auch von der weiteren Transporteinrichtung 6 beibehalten wird.

Das Bezugszeichen 20 kennzeichnet grobschematisch eine Steuerungseinrichtung, die zum Steuern der Vereinzelungseinrichtung (bzw. deren Antriebe), bevorzugt auch der Preformsperre 8 und bevorzugt auch der weiteren Transporteinrichtung 6 dient.

Diese Steuerungseinrichtung 20 bewirkt, wie oben erwähnt, dass die Kunststoffvorformlinge zwischen dem Übernahmebereich B1 und dem Übergabebereich B2 von einer bestimmten Ausgangsgeschwindigkeit auf die Arbeitsgeschwindigkeit beziehungsweise die Transportgeschwindigkeit der weiteren Transporteinrichtung 6 beschleunigt werden.

### Bezugszeichenliste

- 1: Vorrichtung
- 2: Zuführtransporteinrichtung
- 4: Vereinzelungseinrichtung
- 6: Weitere Transporteinrichtung
- 8: Sperreinrichtung/Proformsperre
- 10: Kunststoffvorformlinge
- 20: Steuerungseinrichtung
- 22: Halteelement
- 24: Heizeinrichtung
- 30: nachgeordnete Transporteinrichtung
- 42: Träger
- 44 a, b: Ausnehmungen
- 48: Führungsbogen
- B1: Übernahmebereich
- B2: Übergabebereich
- D: Drehachse
- P: Transportpfad

## Patentansprüche

1. Verfahren zum Behandeln von Kunststoffvorformlingen (10), wobei die Kunststoffvorformlinge mit einer Zuführtransporteinrichtung (2) in einer Reihe transportiert werden und mittels einer Vereinzelungseinrichtung (4) vereinzelt werden, wobei die Vereinzelungseinrichtung (4) einen bezüglich einer vorgegebenen Drehachse (D) drehbaren Träger (42) aufweist, der an seinem Außenumfang (42a) eine Vielzahl von zueinander in einer Umfangsrichtung des Trägers (42) äquidistanten Ausnehmungen (44a, 44b) zum Aufnehmen der Kunststoffvorformlinge (10) in einem Übernahmebereich (B1) aufweist, wobei diese Vereinzelungseinrichtung die Kunststoffvorformlinge (10) vereinzelt entlang eines vorgegebenen Transportpfadabschnitts transportiert und wobei die Vereinzelungseinrichtung die Kunststoffvorformlinge (10) in einem Übergabebereich (B2) an eine weitere Transporteinrichtung (6) übergibt, welche die Kunststoffvorformlinge mit einer vorgegebenen Transportgeschwindigkeit weiter transportiert, **dadurch gekennzeichnet, dass**
während eines Anlaufvorgangs die Vereinzelungseinrichtung (4) eine Transportgeschwindigkeit, mit der sie die Kunststoffvorformlinge von dem Übernahmebereich (B1) zu dem Übergabebereich (B2) fördert, erhöht.

2. Verfahren nach Anspruch 1,
**dadurch gekennzeichnet, dass**
die Vereinzelungseinrichtung (4) die Transportgeschwindigkeit erhöht, bis diese der Transportgeschwindigkeit der weiteren Transporteinrichtung (6) entspricht.

3. Verfahren nach Anspruch 1,
**dadurch gekennzeichnet, dass**
der erste Kunststoffvorformling, der nach dem Anlaufen der Maschine der Vereinzelungseinrichtung zugeführt wird, die größte Beschleunigung erfährt.

4. Verfahren nach wenigstens einem der vorangegangenen Ansprüche,
**dadurch gekennzeichnet, dass**
eine Sperreinrichtung (8) vor oder während eines Anlaufvorgangs die Zufuhr der Kunststoffvorformlinge in die Vereinzelungseinrichtung freigibt.

5. Verfahren nach wenigstens einem der vorangegangenen Ansprüche,
**dadurch gekennzeichnet, dass**
zunächst die weitere Transporteinrichtung (6) auf eine Arbeitsgeschwindigkeit beschleunigt wird und anschließend die Vereinzelungseinrichtung (4) mit Kunststoffvorformlingen (10) bestückt wird und ebenfalls auf die Arbeitsgeschwindigkeit beschleunigt wird.

6. Verfahren nach wenigstens einem der vorangegangenen Ansprüche,
**dadurch gekennzeichnet, dass**
die Kunststoffvorformlinge während des Transports mit der weiteren Transporteinrichtung (8) erwärmt werden.

7. Vorrichtung zur Behandlung von Kunststoffbehältnissen
mit einer Zuführtransporteinrichtung (2), welche dazu geeignet ist, die Kunststoffvorformlinge in einer Reihe zu transportieren und mit einer in einer Transportrichtung der Kunststoffvorformlinge nach der Zuführtransporteinrichtung angeordneten Vereinzelungseinrichtung (4), welche die Kunststoffvorformlinge vereinzelt, wobei die Vereinzelungseinrichtung (4) einen bezüglich einer vorgegebenen Drehachse (D) drehbaren Träger (42) aufweist, der an seinem Außenumfang (42a) eine Vielzahl von zueinander in einer Umfangsrichtung des Trägers (42) äquidistanten Ausnehmungen (44a, 44b) zum Aufnehmen der Kunststoffvorformlinge (10) in einem Übernahmebereich (B1) aufweist, wobei diese Vereinzelungseinrichtung die Kunststoffvorformlinge (10) vereinzelt entlang eines vorgegebenen Transportpfadabschnitts transportiert und mit einer weiteren Transporteinrichtung (6), welche sich in der Transportrichtung an die Vereinzelungseinrichtung (4) anschließt, wobei die Kunststoffvorformlinge(10) in einem Übergabebereich (B2) von der Vereinzelungseinrichtung an diese weitere Transporteinrichtung (6) übergebbar sind und die weitere Transporteinrichtung (6) die Kunststoffvorformlinge mit einer vorgegebenen Transportgeschwindigkeit weiter transportiert,
**dadurch gekennzeichnet, dass**
die Vorrichtung (1) eine Steuerungseinrichtung (20) zum Steuern der Vereinzelungseinrichtung (4) und/oder der weiteren Transporteinrichtung (6) aufweist, welche bewirkt, dass während eines Anlaufvorgangs die Vereinzelungseinrichtung (4) eine Transportgeschwindigkeit, mit der sie die Kunststoffvorformlinge von dem Übernahmebereich (B1) zu dem Übergabebereich (B2) fördert, erhöht.

8. Vorrichtung (1) nach dem vorangegangenen Anspruch,
**dadurch gekennzeichnet, dass**
die Vorrichtung eine Sperreinrichtung (8) aufweist, welche zwischen der Zuführtransporteinrichtung (2) und der Vereinzelungseinrichtung (4) angeordnet ist, und welche derart schaltbar ist, dass sie eine Zufuhr der Kunststoffvorformlinge (10) zu der Vereinzelungseinrichtung ermöglicht oder verhindert.

9. Vorrichtung nach wenigstens einem der vorangegangenen Ansprüche,
**dadurch gekennzeichnet, dass**
die Steuerungseinrichtung die Vereinzelungseinrichtung derart steuert, dass in einem Arbeitsbetrieb die Vereinzelungseinrichtung (4) und die weitere Transporteinrichtung (6) synchronisiert betreibbar sind und insbesondere die Steuerungseinrichtung die Vereinzelungseinrichtung während des Anlaufvorgangs derart steuert, dass die Transportgeschwindigkeit des ersten während des Anlaufvorgangs der Vereinzelungseinrichtung zugeführten Kunststoffvorformlings während der Übergabe an die weitere Transporteirichtung in dem Übergabebereich auf die Transportgeschwindigkeit der weiteren Transporteinrichtung (6) synchronisiert ist.

10. Vorrichtung nach wenigstens einem der vorangegangenen Ansprüche,
**dadurch gekennzeichnet, dass**
der Transportträger segmentiert aufgebaut ist.

## Claims

1. Method for treating plastic preforms (10), wherein the plastic preforms are transported in a row by a feed transport device (2) and are separated by means of a separating device (4), wherein the separating device (4) has a carrier (42) which is rotatable with respect to a predetermined axis of rotation (D) and which has on its outer circumference (42a) a plurality of recesses (44a, 44b) equidistant from one another in a peripheral direction of the carrier (42) for receiving the plastic preforms (10) in a takeover area (B1), wherein this separating device transports the plastic preforms (10) separately along a predetermined transport path section and wherein the separating device transfers the plastic preforms (10) in a transfer area (B2) to a further transport device (6) which transports the plastic preforms further at a predetermined transport speed,
**characterised in that**
during a start-up process the separating device (4) increases a transport speed at which it conveys the plastic preforms from the takeover area (B1) to the transfer area (B2).

2. Method according to claim 1,
**characterised in that**
the separating device (4) increases the transport speed until this corresponds to the transport speed of the further transport device (6).

3. Method according to claim 1,
**characterised in that**
the first plastic preform, which is fed to the separating device after the machine has started up, undergoes the greatest acceleration.

4. Method according to at least one of the preceding claims,
**characterised in that**
a blocking device (8) releases the feed of the plastic preforms into the separating device before or during a start-up process.

5. Method according to at least one of the preceding claims,
**characterised in that**
first the further transport device (6) is accelerated to a working speed and then the separating device (4) is loaded with plastic preforms (10) and is also accelerated to the working speed.

6. Method according to at least one of the preceding claims,
**characterised in that**
the plastic preforms are heated during transport with the further transport device (8).

7. Apparatus for treating plastic containers with a feed transport device (2) which is suitable for transporting the plastic preforms in a row and with a separating device (4) which is arranged downstream of the feed transport device in a transport direction of the plastic preforms, which separates the plastic preforms, wherein the separating device (4) having a carrier (42) which can be rotated with respect to a predetermined axis of rotation (D) and which, on its outer circumference (42a), has a plurality of recesses (44a, 44b) for receiving the plastic preforms in a takeover area (B1) and which are equidistant from one another in a circumferential direction of the carrier (42) , wherein this separating device transporting the plastic preforms (10) separately along a predetermined transport path section and with a further transport device (6) which adjoins the separating device (4) in the transport direction, wherein the plastic preforms (10) can be transferred in a transfer area (B2) from the separating device to this further transport device (6) and the further transport device (6) transports the plastic preforms further at a predetermined transport speed, **characterised in that**
the apparatus (1) has a control device (20) for controlling the separating device (4) and/or the further transport device (6), which has the effect that, during a start-up process, the separating device (4) increases a transport speed at which it conveys the plastic preforms from the takeover area (B1) to the transfer area (B2).

8. Apparatus (1) according to the preceding claim,
**characterised in that**
the apparatus has a blocking device (8) which is arranged between the feed transport device (2) and the separating device (4) and which can be switched in such a way that it enables or prevents the plastic preforms (10) from being fed to the separating device.

9. Apparatus according to at least one of the preceding claims,
**characterised in that**
the control device controls the separating device in such a way that in an operating mode the separating device (4) and the further transport device (6) can be operated in a synchronised manner and in particular the control device controls the separating device during the start-up process in such a way that the transport speed of the first plastic preform fed to the separating device during the start-up process is synchronised with the transport speed of the further transport device (6) during the transfer to the further transport direction in the transfer area.

10. Apparatus according to at least one of the preceding claims,
**characterised in that**
the transport carrier has a segmented structure.

## Revendications

1. Procédé de traitement de préformes en matière plastique (10), dans lequel les préformes en matière plastique sont transportées en rang avec un système de transport d'amenée (2) et séparées au moyen d'un système de séparation (4), dans lequel le système de séparation (4) présente un support (42) pouvant tourner par rapport à un axe de rotation (D) prédéfini, qui présente sur sa périphérie extérieure (42a) une pluralité d'évidements (44a, 44b) équidistants les uns des autres dans une direction périphérique du support (42) pour la réception des préformes en matière plastique (10) dans une zone de prise en charge (B1), dans lequel ce système de séparation transporte les préformes en matière plastique (10) de manière séparée le long d'une partie de trajet de transport prédéfinie et dans lequel le système de séparation transfère les préformes en matière plastique (10) dans une zone de transfert (B2) sur un autre système de transport (6), lequel continue de transporter les préformes en matière plastique à une vitesse de transport prédéfinie,
**caractérisé en ce que**
pendant un processus de démarrage le système de séparation (4) augmente une vitesse de transport à laquelle il convoie les préformes en matière plastique à partir de la zone de prise en charge (B1) vers la zone de transfert (B2).

2. Procédé selon la revendication 1,
**caractérisé en ce que**
le système de séparation (4) augmente la vitesse de transport jusqu'à ce que celle-ci corresponde à la vitesse de transport de l'autre système de transport (6).

3. Procédé selon la revendication 1,
**caractérisé en ce que**
la première préforme en matière plastique, qui est amenée au système de séparation après le démarrage de la machine, subit la plus grande accélération.

4. Procédé selon au moins l'une des revendications précédentes,
**caractérisé en ce que**
un système de blocage (8) libère l'amenée des préformes en matière plastique dans le système de séparation avant ou pendant un processus de démarrage.

5. Procédé selon au moins l'une des revendications précédentes,
**caractérisé en ce que**
tout d'abord l'autre système de transport (6) est accéléré à une vitesse de travail et ensuite le système de séparation (4) est équipé de préformes en matière plastique (10) et également accéléré à la vitesse de travail.

6. Procédé selon au moins l'une des revendications précédentes,
**caractérisé en ce que**
les préformes en matière plastique sont chauffées pendant le transport avec l'autre système de transport (8).

7. Dispositif pour le traitement de préformes en matière plastique
avec un système de transport d'amenée (2), lequel est adapté pour transporter les préformes en matière plastique en rang et avec un système de séparation (4) disposé après le système de transport d'amenée dans une direction de transport des préformes en matière plastique, lequel sépare les préformes en matière plastique, dans lequel le système de séparation (4) présente un support (42) pouvant tourner par rapport à un axe de rotation (D) prédéfini, qui présente sur sa périphérie extérieure (42a) une pluralité d'évidements (44a, 44b) équidistants les uns des autres dans une direction périphérique du support (42) pour la réception des préformes en matière plastique (10) dans une zone de prise en charge (B1), dans lequel ce système de séparation transporte les préformes en matière plastique (10) de manière séparée le long d'une partie de trajet de transport prédéfinie et avec un autre système de transport (6), lequel se raccorde au système de séparation (4) dans la direction de transport, dans lequel les préformes en matière plastique (10) peuvent être transférées dans une zone de transfert (B2) à partir du système de séparation sur cet autre système de transport (6) et l'autre système de transport (6) transporte les préformes en matière plastique à une vitesse de transport prédéfinie,
**caractérisé en ce que**
le dispositif (1) présente un système de commande (20) pour commander le système de séparation (4) et/ou l'autre système de transport (6), lequel a pour effet que pendant un processus de démarrage le système de séparation (4) augmente une vitesse de transport à laquelle il convoie les préformes en matière plastique à partir de la zone de prise en charge (B1) vers la zone de transfert (B2).

8. Dispositif (1) selon la revendication précédente,
**caractérisé en ce que**
le dispositif présente un système de blocage (8), lequel est disposé entre le système de transport d'amenée (2) et le système de séparation (4), et lequel peut être commuté de telle sorte qu'il permet ou empêche une amenée des préformes en matière plastique (10) vers le système de séparation.

9. Dispositif selon au moins l'une des revendications précédentes,
**caractérisé en ce que**
le système de commande commande le système de séparation de telle sorte que dans un mode travail le système de séparation (4) et l'autre système de transport (6) peuvent fonctionner de manière synchronisée et en particulier le système de commande commande le système de séparation pendant le processus de démarrage de telle sorte que la vitesse de transport de la première préforme en matière plastique amenée au système de séparation pendant le processus de démarrage est synchronisée pendant le transfert sur l'autre système de transport dans la zone de transfert sur la vitesse de transport de l'autre système de transport (6).

10. Dispositif selon au moins l'une des revendications précédentes,
**caractérisé en ce que**
le support de transport est à conception segmentée.
